# EUROPÄISCHE PATENTSCHRIFT

(11) **EP 2 612 405 B1**
(45) Veröffentlichungstag und Bekanntmachung des Hinweises auf die Patenterteilung: **02.01.2019**
(21) Anmeldenummer: 11761278.8
(22) Anmeldetag: 29.08.2011
(51) Int. Cl.: H01S 3/13, H01S 3/00, H01S 3/067, H01S 3/23, G02B 27/28, G02B 27/14

(54) **OPTISCHE VERSTÄRKERANORDNUNG**
OPTICAL AMPLIFIER ARRANGEMENT
ENSEMBLE AMPLIFICATEUR OPTIQUE

(30) Priorität: 30.11.2010 DE 102010052950; 31.08.2010 DE 102010036030
(43) Veröffentlichungstag der Anmeldung: 10.07.2013
(73) Patentinhaber: Fraunhofer-Gesellschaft zur Förderung der angewandten Forschung e.V., 80686 München (DE); Friedrich-Schiller-Universität Jena, 07743 Jena (DE)
(72) Erfinder: KLENKE, Arno, 07747 Jena (DE); SEISE, Enrico, 07639 Tautenhain (DE); LIMPERT, Jens, 07751 Jena (DE); TÜNNERMANN, Andreas, 99425 Weimar (DE)
(74) Vertreter: Isfort, Olaf
(86) Internationale Anmeldenummer: PCT/EP2011/004321
(87) Internationale Veröffentlichungsnummer: WO 2012/028287

(56) Entgegenhaltungen:
- US-A- 5 694 408
- US-A1- 2003 099 439
- US-A1- 2005 128 554
- US-A1- 2006 078 033
- US-A1- 2008 037 028
- US-A1- 2009 201 575
- US-A1- 2009 219 610
- US-A1- 2010 142 573
- US-B1- 6 208 442
- JIANG S ET AL: "Impact of self-phase modulation on coherently combined fiber chirped-pulse amplifiers", OPTICS LETTERS, OSA, OPTICAL SOCIETY OF AMERICA, WASHINGTON, DC, US, Bd. 35, Nr. 8, 15. April 2010 (2010-04-15) , Seiten 1293-1295, XP001553256, ISSN: 0146-9592, DOI: 10.1364/OL.35.001293
- MOUROU G A ET AL: "The road to high peak power and high average power lasers: coherent-amplification-network (CAN)", AIP CONFERENCE PROCEEDINGS, AMERICAN INSTITUTE OF PHYSICS, NEW YORK, US, Bd. 827, Nr. 1, 1. Januar 2006 (2006-01-01), Seiten 152-163, XP002430795, ISSN: 0094-243X, DOI: 10.1063/1.2195207
- ERIC C CHEUNG ET AL: "Phase Locking of a Pulsed Fiber Amplifier", ADVANCED SOLID-STATE PHOTONICS, 27. Januar 2008 (2008-01-27), Seiten WA2-1, XP55031744,
- DANIAULT L ET AL: "Coherent beam combining of two femtosecond fiber chirped-pulse amplifiers", OPTICS LETTERS, OSA, OPTICAL SOCIETY OF AMERICA, WASHINGTON, DC, US, Bd. 36, Nr. 5, 1. März 2011 (2011-03-01), Seiten 621-623, XP001560608, ISSN: 0146-9592, DOI: 10.1364/OL.36.000621 [gefunden am 2011-02-18]
- ENRICO SEISE ET AL: "Coherent addition of fiber-amplified ultrashort laser pulses", OPTICS EXPRESS, Bd. 18, Nr. 26, 20. Dezember 2010 (2010-12-20), Seite 27827, XP55031748, ISSN: 1094-4087, DOI: 10.1364/OE.18.027827

## Beschreibung

Die Erfindung betrifft eine optische Verstärkeranordnung nach dem Oberbegriff von Patentanspruch 1.

Optische Verstärkeranordnungen aus einem Laser und nachfolgenden optischen Verstärkern finden sich in großer Zahl im Stand der Technik. Diese werden benötigt, um die Ausgangsstrahlung von gepulsten Lasern so zu verstärken, dass die Pulsenergie ausreicht, um Aufgaben in der Materialbearbeitung, der Medizin oder Wissenschaft vorzunehmen.

Die Ausgangsenergie und die Pulsspitzenleistung der im Stand der Technik bekannten Ultrakurzpulsverstärker sind durch verschiedene physikalische Effekte oder durch technische Merkmale der Verstärkeranordnung limitiert. So führt beispielsweise die hohe Spitzenintensität der kurzen Laserimpulse zu nichtlinearen Effekten im Verstärkermedium, welche die Pulsqualität verschlechtern und somit die maximale Pulsspitzenleistung im Verstärker begrenzen. Ebenso begrenzen die Zerstörschwelle des Lasermaterials bzw. die maximal mögliche thermische Last aufgrund von Absorption die erreichbare Ausgangsleistung des Verstärkers.

Zu den im Stand der Technik bekannten Ultrakurzpulsverstärkern gehören die Chirped-Pulse-Amplification-Verstärker (CPA-Verstärker). Bei diesen werden die zu verstärkenden Pulse zuerst mittels eines Pulsstreckers zeitlich gestreckt, so dass sich die Pulsspitzenleistung verringert. Die so gestreckten Pulse werden anschließend mit Hilfe eines oder mehrerer Verstärker verstärkt und innerhalb eines Pulskompressors zeitlich rekomprimiert. Hierdurch ist es möglich, unter Vermeidung nichtlinearer Effekte einen hohen Verstärkungsfaktor zu erreichen.

Weiterhin ist es bekannt, eine Degradation der Pulsqualität aufgrund nichtlinearer Effekte mit der Methode der Pulsformung zu vermeiden. Hierbei werden mit Hilfe geeigneter optischer Elemente, beispielsweise optischen Modulatoren, die Phase, Amplitude oder weitere Parameter des Laserpulses variiert.

Weiterhin kommen beim Einsatz faseroptischer Verstärker häufig sog. LMA-Fasern zur Anwendung. Diese Large-Mode-Area-Fasern verfügen über einen im Gegensatz zu herkömmlichen Single-Mode-Fasern vergrößerten Kerndurchmesser, in welchem jedoch nur wenige Moden ausbreitungsfähig sind. Die Variation des Modenfelddurchmessers ermöglicht so, aufgrund der größeren Strahlfläche, eine entsprechende Erhöhung der möglichen Pulsspitzenleistung.

Des Weiteren ist es im Stand der Technik bekannt, zur Verstärkung ultrakurzer Laserpulse externe passive Resonatoren zu verwenden, in welchen die Pulse kohärent überlagert werden und somit die Intra-Cavity-Leistung ansteigt.

Weiterhin ist es bekannt, zur Erreichung hochenergetischer Laserstrahlung mehrere Laser mit unterschiedlichen Frequenzen inkohärent zu kombinieren. Dies ermöglicht eine Skalierung der Ausgangsleistung im cw-Betrieb oder bei gepulstem Betrieb mit Pulslängen im Nanosekundenbereich.

Ebenso ist es bekannt, die Ausgangsleistung mehrerer cw-Laser kohärent zu kombinieren, wobei die Ausgangsleistung nach Bedarf skaliert werden kann. Die Kopplung erfolgt dabei durch die Technik des sog. Self-Injection-Seedings bzw. durch eine aktive Stabilisierung.

Daneben kann ebenfalls eine kohärente Überlagerung von Laserpulsen mit spektral separierten Einzelspektren stattfinden. Dies ermöglicht die Generierung von Pulsen mit gegenüber den Ausgangspulsen deutlich verringerten Pulslängen.

Die hier vorgestellten bekannten Ansätze zur Erzeugung leistungsstarker ultrakurzer Laserpulse können je nach Anwendungssituation gute Ergebnisse erzielen.

Optische Verstärkeranordnungen zur Verstärkung von Laserstrahlung, mit zwei oder mehr in Propagationsrichtung der Laserstrahlung nach dem Laser angeordneten optischen Verstärkern, wobei zwischen dem Laser und den optischen Verstärkern mindestens ein Aufteilungselement angeordnet ist, welches die gepulste Laserstrahlung auf mehrere Verstärkerkanäle aufteilt, und wobei den Verstärkerkanälen mindestens ein gemeinsames Kombinationselement nachgeordnet ist, welches die Laserstrahlung kohärent überlagert, sind aus den Druckschriften US 5,694,408, US 2008/0037028 A1, US 2003/0099439 A1, US 2009/201575 A1, US 2009/219610 A1, US 2005/128554 A1 sowie US 2010/0142573 A1 bekannt.

Die Aufgabe der vorliegenden Erfindung ist es, eine Alternative zu den bekannten Ansätzen zu bieten.

Der hier vorgestellte Ansatz basiert darauf, die Limitierungen der Pulsspitzenleistung bzw. der Ausgangsenergie von Ultrakurzpulsverstärkern zu umgehen.

Dies erfolgt dadurch, dass zwischen dem Laser und den optischen Verstärkern mindestens ein Aufteilungselement angeordnet ist, welches die gepulste Laserstrahlung auf mehrere Verstärkerkanäle aufteilt, wobei jeder Verstärkerkanal mindestens einen optischen Verstärker aufweist, und wobei den Verstärkerkanälen mindestens ein gemeinsames Kombinationselement nachgeordnet ist, welches die in den Verstärkerkanälen verstärkte gepulste Laserstrahlung kohärent überlagert.

Die vorliegende Erfindung bezieht sich auf eine optische Verstärkeranordnung nach Anspruch 1 und auf die Verwendung einer solchen optischen Verstärkeranordnung nach Anspruch 8.

Durch die erfindungsgemäße Aufteilung des Laserstrahls mit Hilfe eines Aufteilungselementes und die anschließende getrennte Verstärkung innerhalb mehrerer paralleler Verstärkerkanäle ist es im Gesamtresultat möglich, höhere Pulsspitzen- und Durchschnittsleistungen zu erzielen, als dies mit einem oder mehreren Verstärkern für den gesamten Laserstrahl möglich wäre. Die Überlagerung der Laserstrahlung aus den einzelnen Verstärkerkanälen erfolgt kohärent, d.h. die Laserpulse müssen eine feste Phasenbeziehung zueinander besitzen, damit sich nach der Überlagerung ein stabiler Ausgangspuls formt. Hierbei wird die optische Weglänge zwischen Aufteilungselement und Kombinationselement für jeden Kanal so eingestellt, dass die Differenz der optischen Weglängen zwischen jeweils zwei Kanälen nicht mehr als Lambda/4 beträgt. Die Wellenlänge Lambda soll dabei die Mittenwellenlänge der verwendeten Laserstrahlung sein. Alternativ kann die optische Weglänge zwischen Aufteilungselement und Kombinationselement auch so abgeglichen werden, dass die Differenz der optischen Weglängen zwischen zwei Kanälen ein Vielfaches von Lambda plus ein Offset beträgt, wobei dieser Offset nicht größer als Lambda/4 ist. Des Weiteren soll diese Differenz maximal so groß sein wie das Produkt aus Lichtgeschwindigkeit c und der zeitlichen Pulsbreite des verwendeten Laserpulses im Transformlimit Δτ. Die Aufteilung des Laserstrahls in die parallelen Verstärkerkanäle durch das Aufteilungselement kann sowohl in gleichen Anteilen als auch in ungleichen Anteilen in Bezug auf die Pulsenergie erfolgen. Grundsätzlich hat es sich in der Praxis als vorteilhaft herausgestellt, dass der modengekoppelte Laser nahezu linear polarisierte Strahlung emittiert. Ebenso ist es vorteilhaft, dass die Laserstrahlung nach den einzelnen Verstärkerkanälen, d.h. vor der Rekombination, nahezu linear polarisiert ist. Dadurch lässt sich nach der Kombination wieder eine annähernd lineare Polarisation der Pulse erreichen.

Die von dem Laser emittierten ultrakurzen Laserpulse werden vor der Aufteilung optional in einem oder mehreren Verstärkern oder Verstärkersystemen vorverstärkt. Danach wird der Laserstrahl in mehrere Strahlen auf verschiedene Kanäle aufgeteilt, in welchen die einzelnen Strahlen beispielsweise bis an die Grenzen des jeweiligen Verstärkersystems optisch verstärkt werden. Insgesamt ist hierdurch ein wesentlich höherer Verstärkungsfaktor möglich, als bei Verstärkung des unaufgeteilten Gesamtpulses.

Die Kohärenz bzw. die Synchronisation der einzelnen verstärkten Strahlanteile in den parallelen Verstärkerkanälen wird dadurch sichergestellt, dass die Strahlung aus einer gemeinsamen Laserquelle emittiert wurde. Zusätzliche etwaige Abweichungen der einzelnen Pulsanteile untereinander, z.B. bzgl. der optischen Weglänge, können durch eine aktive Stabilisierung korrigiert werden.

Zweckmäßig weist die optische Verstärkeranordnung zwischen Laser und Aufteilungselement mindestens einen Gesamtvorverstärker auf. Hierbei kann der noch unaufgeteilte Ausgangsstrahl des Lasers soweit vorverstärkt werden, wie es die Grenzen des jeweiligen Gesamtvorverstärkers zulassen. Der Gesamtvorverstärker kann dabei ebenfalls aus mehreren Verstärkerstufen bestehen.

Weiterhin ist vorgesehen, dass das Aufteilungselement der optischen Verstärkeranordnung ein polarisierender Strahlteiler ist, wobei mehrere polarisierende Strahlteiler hintereinander angeordnet sind und zwischen den einzelnen Strahlteilern drehbare Wellenplatten angeordnet sind. Dieses Aufteilungselement ist geeignet, den Ausgangsstrahl des Lasers zu gleichen oder ungleichen Teilen aufzuteilen. Beispielsweise beim Einsatz mehrerer polarisierender Strahlteiler kann eine Hintereinanderanordnung so ausgeführt sein, dass die Laserstrahlung zwischen den polarisierenden Strahlteilern in der Art durch Wellenplatten gedreht wird, dass eine weitere Aufteilung der Laserstrahlung erfolgen kann. Ebenso ist es auch denkbar, dass die aufeinander folgenden polarisierenden Strahlteiler in der Art gegeneinander verdreht sind, dass eine weitere Aufteilung der Laserstrahlung erfolgen kann.

Die Erfindung sieht vor, dass die optischen Verstärker und/oder die Gesamtvorverstärker faseroptische Verstärker oder Kombinationen von optischen Verstärkern sind. Durch mehrere hintereinander geschaltete Vorverstärkerstufen lässt sich das Ausgangssignal des Lasers maximal vorverstärken, so dass die anschließende Verstärkung in den einzelnen Verstärkerkanälen ebenfalls durch einen oder mehrere Verstärker optimal durchgeführt werden kann. Der Einsatz faseroptischer Verstärker ermöglicht dabei eine einfache Integration in ein faserbasiertes Verstärkersystem.

Ähnlich der vorgenannten Ausgestaltung des Aufteilungselementes ist vorgesehen, dass das Kombinationselement ein polarisierender Strahlteiler ist, wobei mehrere polarisierende Strahlteiler hintereinander angeordnet sind und zwischen den einzelnen Strahlteilern drehbare Wellenplatten angeordnet sind. Hierbei lassen sich beispielsweise durch die Hintereinanderanordnung mehrerer polarisierender Strahlteiler als Kombinationselemente zwischen den einzelnen Strahlteilern drehbare Wellenplatten so anordnen, dass eine weitere Kombination der Laserstrahlung erfolgen kann. Ebenso können die polarisierenden Strahlteiler selbst so gegeneinander verdreht werden, dass eine weitere Kombination erfolgt.

Eine vorteilhafte Ausgestaltung der Erfindung sieht vor, dass die optische Verstärkeranordnung vor dem Aufteilungselement einen Pulsstrecker und nach dem Kombinationselement einen Pulskompressor aufweist, welche in Verbindung mit den optischen Verstärkern der Verstärkerkanäle ein CPA-System bilden. Zusätzlich zu der erfindungsgemäßen Lehre des Hauptanspruchs ist hier das Chirped-Pulse-Amplification-Prinzip eingebracht. Dabei streckt der Pulsstrecker die Laserpulse zeitlich, damit diese bei gleicher Energie eine geringere Pulsspitzenleistung besitzen. Dadurch können die Laserpulse in den nachfolgenden Verstärkern mit höheren Verstärkungsfaktoren verstärkt werden. Nach der Verstärkung und nach der Kombination mittels Kombinationselement wird die Pulsdauer der Laserpulse im Pulskompressor wieder verkürzt. Zusätzlich oder alternativ zu dem Pulsstrecker und dem Pulskompressor außerhalb der Verstärkerkanäle ist es ebenso möglich, dass in einem oder mehreren Verstärkerkanälen ein Pulsstrecker die Laserpulse zeitlich streckt oder ein Pulskompressor die Laserpulse zeitlich verkürzt. Hierdurch kann der Gesamtverstärkungsfaktor der optischen Verstärkeranordnung maximiert werden.

Eine Ausführungsvariante der Erfindung sieht weiterhin vor, dass die Verstärkerkanäle vor den optischen Verstärkern faseroptische Modulatoren aufweisen. Durch diese faseroptischen Modulatoren kann die zeitliche Phase der Pulse innerhalb der Verstärkerkanäle so variiert werden, dass die Einzelpulse beim Kombinieren eine möglichst geringe Phasendifferenz aufweisen.

Eine Ausführungsvariante der Erfindung sieht vor, dass die optische Verstärkeranordnung mehrere in Stufen hintereinander angeordnete Aufteilungselemente aufweist, welche jeweils die eintretende gepulste Laserstrahlung auf zwei Verstärkerkanäle aufteilen. Durch diese stufenförmige Aufteilung der Laserstrahlung ergibt sich eine Vielzahl möglicher Anordnungen der Aufteilungselemente, welche verschiedene Vor- und Nachteile bzgl. des kohärenten Kombinierens mit sich bringen. So z.B. ist es denkbar, dass jeder durch Aufteilung entstandene Verstärkerkanal wiederum ein Aufteilungselement enthält, welches die gepulste Laserstrahlung auf jeweils zwei weitere Verstärkerkanäle aufteilt. Alternativ kann jedoch auch nur einer der beiden durch Aufteilung entstandenen Verstärkerkanäle wiederum ein Aufteilungselement enthalten, welches die gepulste Laserstrahlung auf jeweils zwei weitere Verstärkerkanäle aufteilt. Weitere hier nicht genannte Aufteilungsvarianten sind im Rahmen der vorliegenden Erfindung ausdrücklich mit eingeschlossen.

Die Erfindung sieht ebenso vor, dass die optische Verstärkeranordnung mehrere in Stufen hintereinander angeordnete Kombinationselemente enthält, welche jeweils die gepulste Laserstrahlung von zwei Verstärkerkanälen in einem gemeinsamen Verstärkerkanal miteinander kombinieren, wobei die kombinierte Laserstrahlung dieses Verstärkerkanals wiederum mittels eines Kombinationselementes mit der Laserstrahlung eines zweiten Verstärkerkanals kombiniert wird. Bei der Kombinierung der einzelnen Laserstrahlen mit Hilfe der unterschiedlich anordnenbaren Kombinationselemente gelten die gleichen Überlegungen wie zuvor bei der Aufteilung. Das heißt, auch hier kann das Kombinationselement aus vielen einzelnen Kombinationselementen bestehen, welche in unterschiedlichster Weise angeordnet werden können. Eine Ausführungsvariante kann hierbei z.B. vorsehen, dass die Laserstrahlung eines Verstärkerkanals zuvor ebenfalls mittels eines Kombinationselementes aus der Laserstrahlung zweier einzelner Verstärkerkanäle kombiniert wurde. Ebenso kann die Laserstrahlung eines der beiden zu kombinierenden Verstärkerkanäle zuvor nicht mittels eines Kombinationselementes kombiniert worden sein.

Ausführungsvarianten der vorliegenden Erfindung sollen nun anhand der Figuren näher erläutert werden. Es zeigen:
- Figur 1:: eine erfindungsgemäße Verstärkeranordnung mit einem modengekoppelten Laser, einem Aufteilungselement, mehreren Verstärkerkanälen und einem Kombinationselement;
- Figur 2:: eine Kombination der Verstärkeranordnung aus Figur 1 mit einem CPA-System;
- Figur 3:: eine Verstärkeranordnung mit faseroptischen Modulatoren in mehreren Verstärkerkanälen ;
- Figuren 4a, 4b:: zwei verschiedene Anordnungen von hintereinander angeordneten Aufteilungselementen;
- Figuren 5a,5b:: zwei verschiedene Anordnungen von hintereinander angeordneten Kombinationselementen.

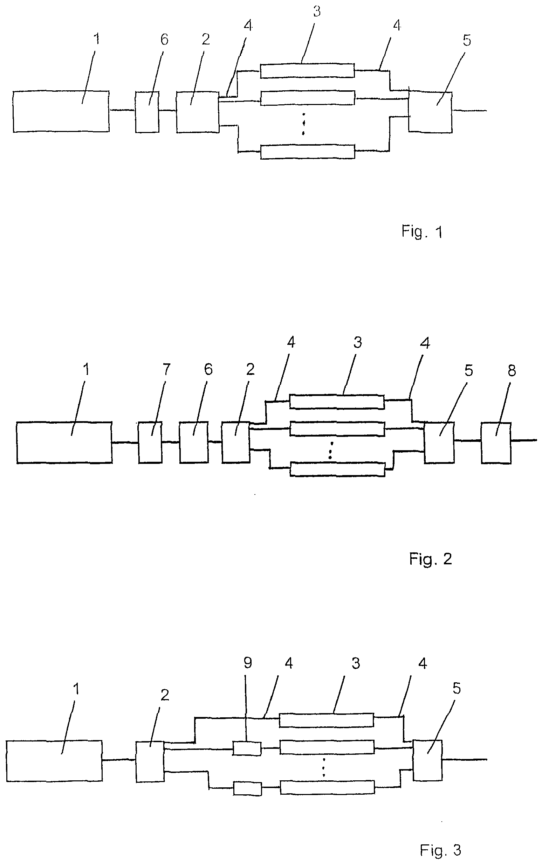

Figur 1 zeigt eine optische Verstärkeranordnung mit einem modengekoppelten Laser 1, einem Aufteilungselement 2, mehreren Verstärkern 3, welche in parallelen Verstärkerkanälen 4 angeordnet sind, und einem Kombinationselement 5. Zwischen Laser 1 und Aufteilungselement 2 ist zusätzlich ein Gesamtvorverstärker 6 angeordnet.

Die Erfindung funktioniert so, dass die gepulste Laserstrahlung des modengekoppelten Lasers 1 zuerst mit Hilfe des Gesamtvorverstärkers 6 maximal vorverstärkt wird. Die vorverstärkte Laserstrahlung wird dann mit Hilfe des Aufteilungselementes 2, welches beispielsweise ein teilreflektierender Spiegel ist, auf mehrere parallele Verstärkerkanäle 4 aufgeteilt. Der jeweilige Teilstrahl wird dann mit Hilfe eines optischen Verstärkers 3 in dem jeweiligen Verstärkerkanal 4 verstärkt. Die optischen Verstärker 3 sind dabei beispielsweise faseroptische Verstärker. Nach der Verstärkung innerhalb der jeweiligen Verstärkerkanäle 4 werden die Laserteilstrahlen durch ein Kombinationselement 5 rekombiniert. Mit Hilfe der optischen Weglänge der Verstärkerkanäle 4 wird sichergestellt, dass die Teilstrahlen zueinander phasenstabil sind und so kohärent zu einem Gesamtlaserpuls vereinigt werden können.

Das Ausführungsbeispiel gemäß Figur 2 zeigt eine optische Verstärkeranordnung in Verbindung mit einem CPA-System. Hierbei wird die gepulste Laserstrahlung des modengekoppelten Lasers 1 mit Hilfe eines Pulsstreckers 7 zeitlich gestreckt und anschließend durch einen Gesamtvorverstärker 6 maximal vorverstärkt. Die so vorverstärkte Strahlung wird mit Hilfe eines Aufteilungselementes 2 auf mehrere parallele Verstärkerkanäle 4 verteilt. Innerhalb der jeweiligen Verstärkerkanäle 4 befinden sich optische Verstärker 3, welche die Laserstrahlung innerhalb des jeweiligen Verstärkerkanals 4 maximal so verstärken, dass nichtlineare Effekte im Wesentlichen unterbleiben. Am Ende der Verstärkerkanäle 4 werden die in ihnen geführten Strahlungsanteile mit Hilfe eines Kombinationselementes 5 rekombiniert und anschließend mit Hilfe eines Pulskompressors 8 zeitlich verkürzt.

Gemäß der in Figur 3 dargestellten Ausführungsvariante wird die Laserstrahlung eines modengekoppelten Lasers 1 mit Hilfe eines Aufteilungselementes 2 ebenfalls in mehrere parallele Verstärkerkanäle 4 eingekoppelt. Innerhalb der Verstärkerkanäle befindet sich jeweils ein faseroptischer Modulator 9, welcher beispielsweise die Phase der geführten Laserstrahlung so einstellt, dass eine Rekombination bestmöglich erfolgen kann. Es empfiehlt sich, bei N Kanälen in N-1 Kanälen faseroptische Modulatoren einzubringen, welche die Phase der N-1 Kanäle an die Phase der in dem ersten Kanal geführten Laserstrahlung anzugleichen. Hinter den faseroptischen Modulatoren 9 innerhalb der Verstärkerkanäle 4 sind optische Verstärker 3 angebracht, welche die modulierten Laserstrahlen verstärken. Nach Verlassen der Verstärkerkanäle 4 werden die so modulierten und verstärkten Laserstrahlen mit Hilfe eines Kombinationselementes 5 rekombiniert. Das Kombinationselement ist in diesem Ausführungsbeispiel faseroptisch oder bulk-optisch realisiert. Prinzipiell können jedoch alle Komponenten monolithisch gespleißt sein, um die Stabilität der Strahlungsparameter zu gewährleisten.

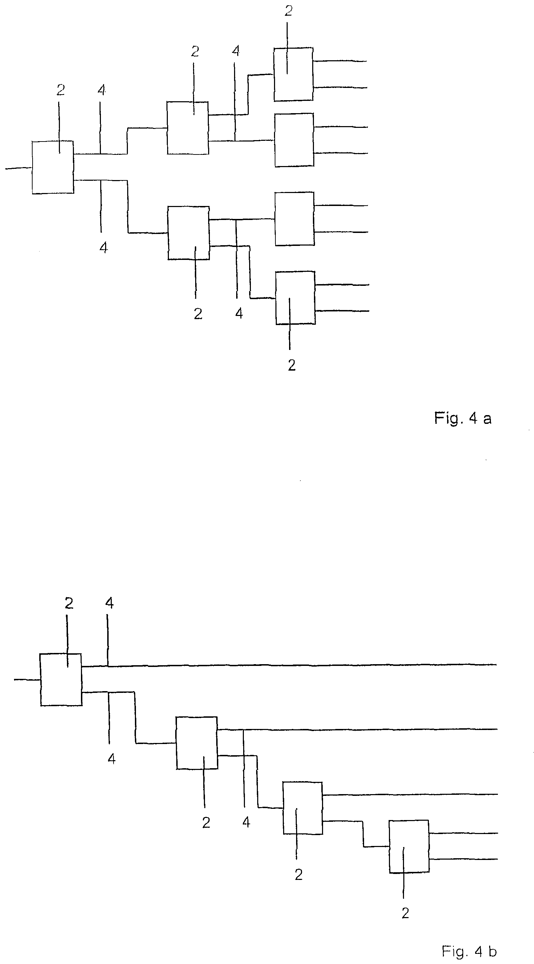

Die Figuren 4a und 4b zeigen mögliche Anordnungsvarianten für die Hintereinanderanordnung von Aufteilungselementen 2. Diese Anordnungen lassen sich in jede Variante einer optischen Verstärkeranordnung als Aufteilungselement 2 integrieren.

Gemäß Figur 4a wird die vom Laser 1 emittierte Laserstrahlung mit Hilfe eines ersten Aufteilungselementes 2 auf zwei parallele Verstärkerkanäle 4 aufgeteilt. In jedem der beiden Verstärkerkanäle 3 befindet sich wiederum ein Aufteilungselement 2, welches jeden der beiden Verstärkerkanäle 4 wiederum in zwei parallele Verstärkerkanäle 4 aufteilt. Diese symmetrische stufenförmige Aufteilungsstruktur lässt sich in beliebig vielen Aufteilungsstufen realisieren.

Gemäß der Aufteilungsanordnung in Figur 4b wird die von dem Laser 1 emittierte Strahlung mit Hilfe eines ersten Aufteilungselementes 2 auf zwei parallele Verstärkerkanäle 4 aufgeteilt. Gemäß dieser Variante befindet sich nur in einem der beiden so entstandenen Verstärkerkanäle 4 ein weiteres Aufteilungselement 2, welches die Laserstrahlung innerhalb des Verstärkerkanals 4 wiederum auf zwei parallele Verstärkerkanäle 4 aufteilt. Auch innerhalb dieser beiden nachgeordneten Verstärkerkanäle 4 befindet sich lediglich in einem Verstärkerkanal 4 wieder ein Aufteilungselement 2. Auch hier kann die Aufteilung der Laserstrahlung in beliebig vielen Aufteilungsstufen erfolgen.

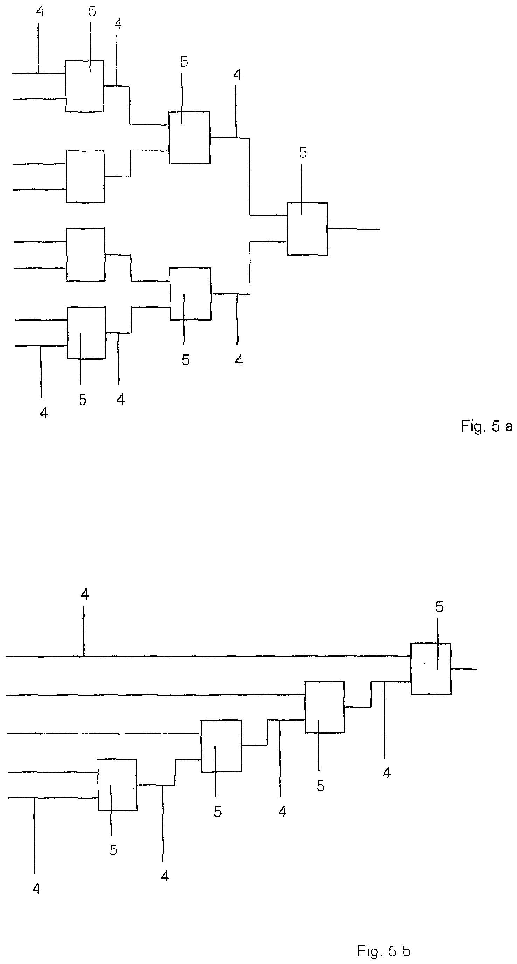

Die Figuren 5a und 5b zeigen verschiedene Anordnungen von Kombinationselementen. Auch hier werden mehrere Kombinationselemente in mehreren hintereinander liegenden Kombinationsstufen rekombiniert.

Gemäß Figur 5a werden acht parallel verlaufende Verstärkerkanäle 4 in vier Paaren mit Hilfe jeweils eines Kombinationselementes 5 zu einem gemeinsamen Verstärkerkanal 4 rekombiniert. Die so entstehenden vier Verstärkerkanäle 4 werden anschließend in zwei Paaren jeweils mit Hilfe eines Kombinationselementes 5 zu einem Verstärkerkanal 4 rekombiniert, so dass lediglich zwei Verstärkerkanäle 4 übrig bleiben, welche mit Hilfe eines finalen Kombinationselementes 5 zu einem Gesamtstrahl vereinigt werden.

Gemäß Figur 5b werden fünf parallele Verstärkerkanäle 4 auf die Art und Weise zu einem gemeinsamen Laserstrahl rekombiniert, dass zwei der fünf Verstärkerkanäle 4 zuerst mit Hilfe eines Kombinationselementes 5 zu einem gemeinsamen Verstärkerkanal 4 zusammengeführt werden, so dass lediglich vier parallele Verstärkerkanäle 4 übrig bleiben. Zu dem rekombinierten Verstärkerkanal 4 wird ein weiterer Verstärkerkanal 4 mit Hilfe eines weiteren Kombinationselementes 5 kombiniert, so dass nach dem Kombinationselement 5 lediglich drei Verstärkerkanäle 4 übrig bleiben. Diese Kombinationskette wird in zwei weiteren Stufen so fortgeführt, dass hinter dem finalen Kombinationselement 5 lediglich ein Gesamtlaserstrahl übrig bleibt.

Neben den in den Figuren 4a, 4b sowie 5a und 5b gezeigten Anordnungsvarianten für Kombinationselemente und Aufteilungselemente lassen sich viele weitere, hier nicht näher dargestellte, Anordnungsvarianten ausbilden. Ebenso ist es denkbar, dass verschiedene Anordnungsvarianten innerhalb einer Verstärkeranordnung miteinander verbunden werden.

## Patentansprüche

1. Optische Verstärkeranordnung zur Verstärkung ultrakurzer gepulster Laserstrahlung mit einem modengekoppelten Laser (1) und zwei oder mehr in Propagationsrichtung der Laserstrahlung nach dem Laser (1) angeordneten optischen Verstärkern (3), wobei zwischen dem Laser (1) und den optischen Verstärkern (3) mindestens ein Aufteilungselement (2) angeordnet ist, welches die gepulste Laserstrahlung auf mehrere Verstärkerkanäle (4) aufteilt, wobei jeder Verstärkerkanal (4) mindestens einen optischen Verstärker (3) aufweist, und wobei den Verstärkerkanälen (4) mindestens ein gemeinsames Kombinationselement (5) nachgeordnet ist, welches die in den Verstärkerkanälen (4) verstärkte gepulste Laserstrahlung kohärent überlagert, **dadurch gekennzeichnet, dass** das Aufteilungselement (2) ein polarisierender Strahlteiler und das Kombinationselement (5) ebenfalls ein polarisierender Strahlteiler ist, wobei mehrere polarisierende Strahlteiler hintereinander angeordnet sind und zwischen den einzelnen Strahlteilern drehbare Wellenplatten angeordnet sind.

2. Optische Verstärkeranordnung nach Anspruch 1, **dadurch gekennzeichnet, dass** zwischen Laser (1) und Aufteilungselement (2) mindestens ein Gesamtvorverstärker (6) angeordnet ist.

3. Optische Verstärkeranordnung nach einem der vorhergehenden Ansprüche, **dadurch gekennzeichnet, dass** die optischen Verstärker (3) und/oder die Gesamtvorverstärker (6) faseroptische Verstärker oder Kombinationen von optischen Verstärkern sind.

4. Optische Verstärkeranordnung nach einem der vorhergehenden Ansprüche, **dadurch gekennzeichnet, dass** vor dem Aufteilungselement (2) ein Pulsstrecker (7) und nach dem Kombinationselement (5) ein Pulskompressor (8) angeordnet ist, welche in Verbindung mit den optischen Verstärkern (3) der Verstärkerkanäle (4) ein CPA-System bilden.

5. Optische Verstärkeranordnung nach einem der vorhergehenden Ansprüche, **dadurch gekennzeichnet, dass** die Verstärkerkanäle (4) vor den optischen Verstärkern (3) faseroptische Modulatoren (9) aufweisen.

6. Optische Verstärkeranordnung nach einem der Ansprüche 1 bis 5, **gekennzeichnet durch** mehrere in Stufen hintereinander angeordnete Aufteilungselemente (2), welche jeweils die eintretende gepulste Laserstrahlung auf zwei Verstärkerkanäle (4) aufteilen.

7. Optische Verstärkeranordnung nach einem der Ansprüche 1 bis 6, **gekennzeichnet durch** mehrere in Stufen hintereinander angeordnete Kombinationselemente (5), welche jeweils die gepulste Laserstrahlung von zwei Verstärkerkanälen (4) in einem gemeinsamen Verstärkerkanal (4) miteinander kombinieren, wobei die kombinierte Laserstrahlung dieses Verstärkerkanals (4) wiederum mittels eines Kombinationselementes (5) mit der Laserstrahlung eines zweiten Verstärkerkanals (4) kombiniert wird.

8. Verwendung einer optischen Verstärkeranordnung nach einem der Ansprüche 1 bis 7 zur Verstärkung ultrakurzer gepulster Laserstrahlung.

## Claims

1. Optical amplifier arrangement for amplifying ultra-short pulsed laser radiation with a mode-coupled laser (1) and two or more optical amplifiers (3) arranged downstream of the laser (1) in the propagation direction of the laser radiation, at least one splitting element (2) dividing up the pulsed laser radiation to a plurality of amplifier channels (4) being arranged between the laser (1) and the optical amplifiers (3), each amplifier channel (4) having at least one optical amplifier (3), and at least one combination element (5) coherently superimposing the pulsed laser radiation amplified in the amplifier channels (4) being arranged downstream of the amplifier channels (4),
**characterized in that**
the splitting element (2) is a polarizing beam splitter and the combination element (5) is likewise a polarizing beam splitter, wherein a plurality of polarizing beam splitters are arranged one after another and rotatable wave plates are arranged between the individual beam splitters.

2. Optical amplifier arrangement according to Claim 1, **characterized in that** at least one overall preamplifier (6) is arranged between the laser (1) and splitting element (2).

3. Optical amplifier arrangement according to one of the preceding claims, **characterized in that** the optical amplifier (3) and/or the overall preamplifier (6) are fibre-optic amplifiers or combinations of optical amplifiers.

4. Optical amplifier arrangement according to one of the preceding claims, **characterized in that** a pulse stretcher (7) is arranged upstream of the splitting element (2), and a pulse compressor (8) is arranged downstream of the combination element (5), which, in conjunction with the optical amplifiers (3) of the amplifier channels (4), form a CPA system.

5. Optical amplifier arrangement according to one of the preceding claims, **characterized in that** the amplifier channels (4) upstream of the optical amplifiers (3) have fibre-optic modulators (9).

6. Optical amplifier arrangement according to one of Claims 1 to 5, **characterized by** a plurality of splitting elements (2), which are arranged one after another in stages and which each split the incoming pulsed laser radiation to two amplifier channels (4).

7. Optical amplifier arrangement according to one of Claims 1 to 6, **characterized by** a plurality of combination elements (5) which are arranged one after another in stages and which each combine the pulsed laser radiation from two amplifier channels (4) with each other in a common amplifier channel (4), wherein the combined laser radiation from this amplifier channel (4) is in turn combined with the laser radiation from a second amplifier channel (4) by means of a combination element (5).

8. Use of an optical amplifier arrangement according to one of Claims 1 to 7 for amplifying ultra-short pulsed laser radiation.

## Revendications

1. Ensemble d'amplificateurs optiques, destiné à amplifier un rayonnement laser pulsé à impulsions ultra-courtes, comprenant un laser à couplage de mode (1) et au moins deux amplificateurs optiques (3) disposés en aval du laser (1) par référence à la direction de propagation du rayonnement laser, au moins un élément séparateur (2), qui divise le rayonnement laser pulsé en une pluralité de canaux amplificateurs (4), étant disposé entre le laser (1) et les amplificateurs optiques (3), chaque canal amplificateur (4) comportant au moins un amplificateur optique (3), et au moins un élément de combinaison commun (5), qui superpose de manière cohérente les rayonnements laser pulsés amplifiés dans les canaux amplificateurs (4), étant disposé en aval des canaux amplificateurs (4), **caractérisé en ce que** l'élément séparateur (2) est un séparateur de faisceau polarisant et l'élément de combinaison (5) est également un séparateur de faisceau polarisant, une pluralité de séparateurs de faisceau polarisants étant disposés les uns derrière les autres et des plaques d'onde rotatives étant disposées entre les séparateurs de faisceau individuels.

2. Ensemble d'amplificateurs optiques selon la revendication 1, **caractérisé en ce qu'**au moins un préamplificateur total (6) est disposé entre le laser (1) et l'élément séparateur (2).

3. Ensemble d'amplificateurs optiques selon l'une des revendications précédentes, **caractérisé en ce que** les amplificateurs optiques (3) et/ou les préamplificateurs totaux (6) sont des amplificateurs à fibres optiques ou des combinaisons d'amplificateurs optiques.

4. Ensemble d'amplificateurs optiques selon l'une des revendications précédentes, **caractérisé en ce qu'**un étireur d'impulsions (7) est disposé en amont de l'élément séparateur (2) et un compresseur d'impulsions (8), qui forme un système CPA en association avec les amplificateurs optiques (3) des canaux amplificateurs (4), est disposé en aval de l'élément de combinaison (5) .

5. Ensemble d'amplificateurs optiques selon l'une des revendications précédentes, **caractérisé en ce que** les canaux amplificateurs (4) comportent des modulateurs à fibre optique (9) en amont des amplificateurs optiques (3) .

6. Ensemble d'amplificateurs optiques selon l'une des revendications 1 à 5, **caractérisé par** une pluralité d'éléments séparateurs (2) qui sont disposés de façon étagée les uns derrière les autres et qui répartissent chacun sur le rayonnement laser pulsé entrant sur deux canaux amplificateurs (4).

7. Ensemble d'amplificateurs optiques selon l'une des revendications 1 à 6, **caractérisé par** une pluralité d'éléments de combinaison (5) qui sont disposés les uns derrière les autres de façon étagée et qui combinent chacun les rayonnements laser pulsé de deux canaux amplificateurs (4) en un canal amplificateur commun (4), le rayonnement laser combiné de ce canal amplificateur (4) étant à son tour combiné au moyen d'un élément de combinaison (5) au rayonnement laser d'un deuxième canal amplificateur (4).

8. Utilisation d'un ensemble d'amplificateurs optiques selon l'une des revendications 1 à 7 pour amplifier un rayonnement laser pulsé à impulsions ultra-courtes.
